(19) Europäisches Patentamt
European Patent Office
Office européen des brevets

(11) **EP 3 486 603 B1**

(12) **FASCICULE DE BREVET EUROPEEN**

(45) Date de publication et mention
de la délivrance du brevet:
**09.09.2020 Bulletin 2020/37**

(51) Int Cl.:
*G01B 9/02* (2006.01)    *G01D 5/26* (2006.01)
*G01D 5/353* (2006.01)   *G02F 1/01* (2006.01)
*G02B 26/06* (2006.01)

(21) Numéro de dépôt: **18207033.4**

(22) Date de dépôt: **19.11.2018**

(54) **SYSTÈME DE TRANSDUCTION D'UN DÉPLACEMENT EN UN DÉPHASAGE OPTIQUE**

SYSTEM ZUR UMWANDLUNG EINER BEWEGUNG IN EINE OPTISCHE PHASENVERSCHIEBUNG

SYSTEM FOR TRANSDUCING A DISPLACEMENT INTO AN OPTICAL PHASE SHIFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.11.2017 FR 1760929**

(43) Date de publication de la demande:
**22.05.2019 Bulletin 2019/21**

(73) Titulaire: **Commissariat à l'énergie atomique
et aux énergies alternatives
75015 Paris (FR)**

(72) Inventeurs:
• **Taurel, Boris
  38330 Montbonnot-Saint-Martin (FR)**
• **Duraffourg, Laurent
  38500 Voiron (FR)**
• **Labeye, Pierre
  38000 Grenoble (FR)**

(74) Mandataire: **Brevalex
  56, Boulevard de l'Embouchure
  B.P. 27519
  31075 Toulouse Cedex 2 (FR)**

(56) Documents cités:
**WO-A1-2012/155284    US-A1- 2002 021 853
US-A1- 2015 107 357**

• **TAEJOON KOUH ET AL: "Nanomechanical
Motion Transducers for Miniaturized Mechanical
Systems", MICROMACHINES, vol. 8, no. 4, 1 avril
2017 (2017-04-01), page 108, XP055490696, DOI:
10.3390/mi8040108**

**Description**

**DOMAINE TECHNIQUE**

L'invention concerne le domaine des systèmes opto-mécaniques, qui exploitent des effets de couplage réciproque entre l'optique et la mécanique pour traduire un déplacement mécanique au sein du système en un changement de la phase et/ou de l'intensité d'un signal optique circulant dans le système.

**ÉTAT DE LA TECHNIQUE ANTÉRIEURE**

On connaît dans l'art antérieur un capteur opto-mécanique, permettant de détecter le mouvement d'une nano-poutre grâce à un couplage optique entre cette nano-poutre et un micro-résonateur en anneau.
Un tel capteur est décrit par exemple dans l'article « Optical racetrack resonator transduction of nanomechanical cantilevers », par V.T.K. Sauer & al., Nanotechnology, vol. 25 (2014).
Le micro-résonateur en anneau ne comporte pas de gaine. C'est le milieu environnant qui fait office de gaine.
Ce micro-résonateur est couplé à un guide d'onde d'injection et extraction, par couplage évanescent. Le couplage évanescent réalise un transfert d'énergie entre un mode guidé du guide d'onde d'injection et extraction et un mode guidé du micro-résonateur. Ce transfert d'énergie est maximal aux longueurs d'onde de résonance du micro-résonateur (longueurs d'onde pour lesquelles le déphasage apporté par un tour dans l'anneau est un multiple de $2\pi$).
En fonctionnement, un faisceau lumineux est envoyé en entrée du guide d'onde d'injection et extraction. Une partie du faisceau lumineux s'échappe vers le micro-résonateur. Aux longueurs d'onde de résonance, elle effectue un ou plusieurs tours avant de revenir vers le guide d'onde d'injection et extraction.
La lumière transitant dans le micro-résonateur y subit des pertes optiques, dues notamment à l'absorption par le milieu environnant et à la rugosité du micro-résonateur. Le faisceau lumineux en sortie du guide d'onde d'injection et extraction présente donc une série de minima locaux, aux longueurs d'onde de résonance du micro-résonateur.
La nano-poutre est disposée dans le champ proche du micro-résonateur. Les mouvements de la nano-poutre perturbent donc localement l'indice optique de la gaine du micro-résonateur, ce qui modifie l'indice effectif du micro-résonateur, et donc la phase de l'onde circulant dans le micro-résonateur. Les valeurs de longueurs d'onde de résonance du micro-résonateur sont donc modifiées. En observant ces valeurs de longueurs d'onde de résonance, on observe donc indirectement la position de la nano-poutre.
Un inconvénient de ce dispositif est qu'il existe des fuites optiques par couplage évanescent entre la nano-poutre et le micro-résonateur, qui dépendent de la position de la nano-poutre relativement au micro-résonateur. En d'autres termes, la position de la nano-poutre ne modifie pas uniquement la phase de l'onde circulant dans le micro-résonateur, mais également les pertes introduites par le micro-résonateur.
Ces pertes varient exponentiellement en fonction de la position de la nano-poutre, et présentent des effets non linéaires qui limitent fortement la dynamique du système, dès que les déplacements de la nano-poutre excèdent la limite des très petits déplacements (moins de 20 nm).
Un objectif de la présente invention est de proposer un système opto-mécanique de transduction d'un déplacement en un déphasage optique, permettant de limiter des effets additionnels sur l'intensité.
Le document US 2015/107357 A1 décrit trois possibilités pour réaliser un transducteur opto-mécanique. Pour détecter le mouvement d'un élément mécanique par des moyens optiques on utilise une cavité optique ou le signal évanescent d'un résonateur en anneau. Le document "Nanomechanical Motion Transducers for Miniaturized Mechanical Systems" par Taejoon Kouh dans Micromachines, Vol.8, No.4 (2017) décrit aussi une multitude de systèmes opto-mécaniques. Le document US 2002/021853 montre l'application des structures en deux peignes imbriqués pour influencer des propriétés de la lumière dans un guide d'onde. Les peignes sont des électrodes pour générer des ondes acoustiques de surface, qui, quant à elles, influencent la lumière guidée dans le guide d'onde. Dans le document WO 2012/155284 une structure des électrodes à peigne peut courber une structure de guidage pour influencer les propriétés de la lumière guidée. La structure en peigne ne forme pas partie du guidage.

**EXPOSÉ DE L'INVENTION**

Cet objectif est atteint avec un système opto-mécanique de transduction d'un déplacement en un déphasage optique, comportant :

- au moins une structure de guidage, adaptée à guider un faisceau lumineux centré sur une longueur d'onde prédéterminée, nommée longueur d'onde guidée ; et
- au moins deux tronçons de guide d'onde, agencés chacun pour amener un faisceau lumineux jusqu'à l'au moins une structure de guidage, ou pour éloigner un faisceau lumineux émergeant de l'au moins une structure de guidage.

Selon l'invention :

- l'au moins une structure de guidage comprend une pluralité de poutres parallèles entre elles, réparties les unes à la suite des autres selon un axe d'allongement de la structure de guidage, et agencées en deux peignes partiellement imbriqués l'un dans l'autre ; et
- dans l'au moins une structure de guidage, au moins une poutre est mobile en translation relativement aux autres poutres de la même structure de guidage, selon un axe orthogonal à l'axe d'allongement de la structure de guidage.

La structure de guidage est adaptée à guider le faisceau lumineux centré sur la longueur d'onde guidée. Ladite structure de guidage est donc équivalente à un guide d'onde, nommé guide d'onde équivalent.

Les poutres de la structure de guidage sont agencées en deux peignes. En d'autres termes, lesdites poutres sont réparties en deux séries de poutres, chaque série de poutres formant les doigts d'un peigne.

Ces deux peignes sont partiellement imbriqués l'un dans l'autre. En d'autres termes, chaque poutre de l'une première série (sauf les deux poutres d'extrémité) présente une région d'extrémité intercalée directement ou indirectement entre deux poutres de l'autre seconde série. L'extrémité opposée de ladite poutre est encadrée seulement par des poutres de la même première série. Un tel agencement peut être nommé agencement en peignes interdigités.

Les poutres de l'une et l'autre série peuvent être réparties en alternance, de sorte que chaque poutre de l'une première série (sauf les deux poutres d'extrémité) présente une région d'extrémité intercalée directement entre deux poutres de l'autre seconde série.

En variante, des ensembles de plusieurs poutres voisines de l'une première série peuvent être intercalés entre deux poutres de l'autre seconde série. Chaque poutre de l'une première série (sauf les deux poutres d'extrémité) présente alors une région d'extrémité intercalée indirectement entre deux poutres de l'autre seconde série. Ce cas correspond notamment, mais pas seulement, au cas dans lequel la première série comporte plus de poutre que la seconde série.

Une région d'imbrication des peignes désigne un volume convexe délimité par l'ensemble des régions d'extrémité intercalées directement ou indirectement entre deux poutres de l'autre série. Ladite région d'imbrication des peignes correspond au cœur du guide d'onde équivalent mentionné ci-dessus.

Lorsque les poutres mobiles se déplacent en translation selon un axe orthogonal à l'axe d'allongement de la structure de guidage, la largeur et/ou la hauteur de la région d'imbrication des peignes est modifiée, ce qui correspond à une modification de la largeur et/ou la hauteur du cœur du guide d'onde équivalent.

Cela se traduit par une modification de l'indice effectif du guide d'onde équivalent, et donc de la phase de l'onde guidée dans ce guide d'onde équivalent.

La structure de guidage forme ainsi un transducteur d'un déplacement, ici celui d'au moins une poutre mobile, en un déphasage optique, ici celui de l'onde guidée dans la structure de guidage.

En outre, le système de transduction n'est pas basé sur un phénomène de couplage évanescent, de sorte qu'il présente, par nature, un effet uniquement sur la phase optique. L'invention permet donc de limiter des effets additionnels sur l'intensité, associés à la transduction du déplacement des poutres mobiles en un déphasage optique.

De préférence, les poutres de la structure de guidage forment ensemble, dans une région d'imbrication entre les poutres, une structure périodique ayant un motif élémentaire de dimension A selon l'axe d'allongement de la structure de guidage, avec :

$$2\pi\Lambda < \frac{\lambda}{n_{eff}}$$

où $\lambda$ est la longueur d'onde guidée, et $n_{eff}$ est l'indice effectif du mode guidé dans la structure de guidage.

L'au moins une poutre est avantageusement mobile en translation selon son axe longitudinal.

Les poutres des deux peignes peuvent être réparties en alternance le long de l'axe d'allongement de la structure de guidage.

Le système opto-mécanique selon l'invention peut comporter un résonateur optique, au sein duquel est située la structure de guidage.

Le résonateur optique peut être une cavité linéaire.

Dans ce cas, les miroirs de la cavité linéaire sont avantageusement constitués chacun d'un réseau de Bragg, chaque réseau de Bragg étant formé par deux jeux de poutres secondaires, agencées en deux peignes d'extrémité partiellement imbriqués.

En variante, le résonateur optique peut comporter un guide d'onde recourbé, agencé avec la structure de guidage pour guider la lumière selon un chemin optique en boucle fermée.

Le système opto-mécanique selon l'invention comporte de préférence un interféromètre de Mach-Zehnder, au sein duquel est située la structure de guidage.

Selon un mode de réalisation avantageux, la structure de guidage est située dans un premier bras de l'interféromètre et une structure de référence est située dans un second bras de l'interféromètre, la structure de référence étant identique à la structure de guidage, excepté que l'ensemble des poutres qui la composent sont fixes.

Le système opto-mécanique selon l'invention peut comporter deux structures de guidage situées chacune dans l'un des bras de l'interféromètre, et des poutres mobiles de chacune des deux structures de guidage étant solidaires les unes des autres.

Avantageusement, le système opto-mécanique selon l'invention comporte en outre au moins un adaptateur de mode, chaque adaptateur de mode étant situé à une extrémité de l'une structure de guidage et comprenant :

- une région centrale, de largeur décroissante en s'approchant de la structure de guidage ; et
- deux régions latérales, de largeur croissante en s'approchant de la structure de guidage, situées de part et d'autre de la région centrale et comportant chacune une pluralité de poutres d'adaptation, parallèles aux poutres de la structure de guidage.

De préférence, l'au moins une poutre mobile de la structure de guidage comprend une poutre qui est solidaire d'un support suspendu, le support suspendu s'étendant selon l'axe d'allongement de la structure de guidage.

En complément ou en variante, l'au moins une poutre mobile de la structure de guidage comprend une poutre qui est solidaire d'une masse, la masse étant suspendue au-dessus d'un substrat.

## BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- les figures 1A et 1B illustrent de façon schématique, selon une vue en perspective, un premier mode de réalisation d'un système opto-mécanique et d'une structure de guidage selon l'invention, et le guide d'onde équivalent à ladite structure de guidage ;
- les figures 2A et 2B illustrent de façon schématique, selon une vue de dessus, la structure de guidage de la figure 1A et le guide d'onde équivalent, dans une première position ;
- les figures 3A et 3B illustrent de façon schématique, selon une vue de dessus, la structure de guidage de la figure 1A et le guide d'onde équivalent, dans une deuxième position ;
- la figure 4 illustre l'évolution de l'indice effectif du guide d'onde équivalent de la figure 1B, en fonction de la largeur de sa zone de ;
- les figures 5A et 5B illustrent deux solutions de suspension des poutres mobiles, dans un système opto-mécanique selon l'invention ;
- la figure 6 illustre un adaptateur de mode pour la structure de guidage d'un système opto-mécanique selon l'invention ;
- les figures 7A et 7B illustrent respectivement un deuxième et un troisième modes de réalisation d'une structure de guidage selon l'invention ;
- les figures 8A à 8C illustrent un exemple d'un système opto-mécanique selon l'invention, ainsi que des résultats de simulation associés à ce dernier ;
- les figures 9, 10A et 10B illustrent différents exemples de systèmes opto-mécaniques selon l'invention, dans lesquels la structure de guidage est située dans un résonateur optique ;
- la figure 11 illustre un système opto-mécanique selon l'invention, dans lequel la structure de guidage est située dans un interféromètre ; et
- les figures 12A à 12C illustrent, selon différentes vues, un système opto-mécanique selon l'invention adapté à former un accéléromètre.

## EXPOSÉ DÉTAILLÉ DE MODES DE RÉALISATION PARTICULIERS

Pour plus de clarté, on a représenté sur les figures les axes (Ox), (Oy) et/ou (Oz) d'un repère orthonormé.

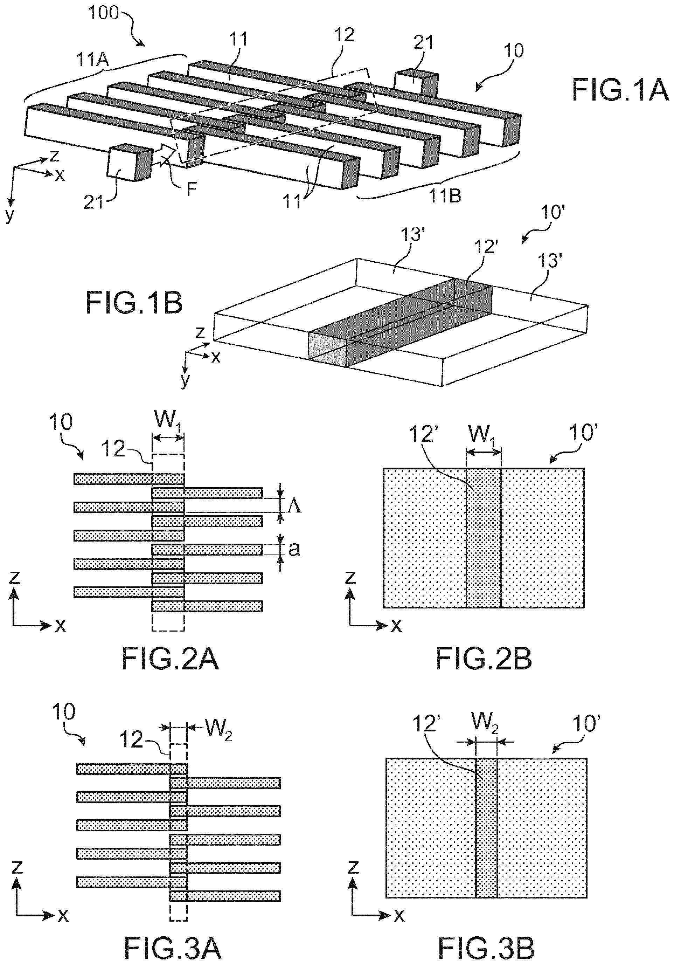

La figure 1A illustre, selon une vue en perspective, et de façon schématique, un premier mode de réalisation d'un système opto-mécanique 100 selon l'invention.

Le système opto-mécanique comporte ici une unique structure de guidage 10 constituée d'une pluralité de poutres 11.

De préférence, toutes les poutres 11 présentent la même composition (même matériau, ou même structure constituée de plusieurs matériaux).

Chaque poutre 11 présente une forme allongée, selon un axe longitudinal respectif. Les axes longitudinaux respectifs de chacune des poutres sont parallèles entre eux, parallèles ici à l'axe (Ox).

Ici, chaque poutre 11 présente une forme de parallélépipède rectangle, dont la plus grande dimension s'étend selon l'axe (Ox), et dont la plus petite dimension s'étend selon l'axe (Oz).

De préférence, mais de manière non limitative, toutes les poutres 11 présentent les mêmes dimensions.

Les poutres 11 sont réparties en deux séries de poutres 11A, 11B.

Dans chaque série 11A respectivement 11B, les poutres 11 sont alignées ensemble selon les axes (Ox) et (Oy), et réparties les unes à la suite des autres selon un axe parallèle à l'axe (Oz). Chaque série de poutres forme ainsi un peigne, dont chaque dent est formée par une poutre.

Les poutres de chaque série 11A, 11B sont réparties selon un pas régulier. Ce pas peut être identique dans les deux séries de poutres.

Dans l'exemple représenté en figure 1A, les poutres des deux séries 11A et 11B sont réparties en alternance le long d'un axe parallèle à l'axe (Oz). En d'autres termes, chaque poutre 11 d'une série est située entre deux poutres de l'autre série (exceptées les deux poutres d'extrémité de la structure de guidage).

En outre, les deux séries de poutres 11A, 11B sont décalées l'une relativement à l'autre selon l'axe (Ox). L'axe (Ox) est parallèle aux axes longitudinaux des poutres 11. Ainsi, chaque poutre 11 d'une série s'étend, au niveau d'une seule de ses extrémités, entre deux poutres de l'autre série. Les deux séries de poutres 11A, 11B forment ainsi deux peignes partiellement imbriqués l'un dans l'autre.

Les poutres 11 des deux séries 11A, 11B sont ainsi réparties les unes à la suite des autres selon un axe parallèle à l'axe (Oz), et désalignées selon l'axe (Ox).

On définit une région d'imbrication 12, correspondant à une région dans laquelle les deux séries de poutres sont imbriquées l'une dans l'autre. Ladite région d'imbrication 12 est constituée ici d'extrémités de poutres 11.

On nomme « axe d'allongement de la structure de guidage », un axe parallèle à (Oz), passant par le centre de ladite région d'imbrication 12.

Dans la région d'imbrication 12, les poutres des deux séries 11A et 11B sont réparties ici selon un pas régulier. En d'autres termes, selon l'axe (Oz) chaque poutre 11 d'une série est située au milieu de l'interstice entre deux poutres de l'autre série (exceptées les deux poutres d'extrémité de la structure de guidage).

Les poutres des deux séries sont agencées suspendues au-dessus d'un substrat, entourées d'un milieu gazeux tel que l'air, ou d'un milieu liquide.

On considère un faisceau lumineux F, centré sur une longueur d'onde prédéterminée, nommée longueur d'onde guidée $\lambda$.

La structure de guidage 10 est adaptée à guider le faisceau lumineux F, de sorte que ce dernier se propage d'une poutre à l'autre, selon l'axe (Oz), dans la région d'imbrication 12.

L'axe d'allongement de la structure de guidage forme ainsi un axe de guidage de la lumière dans la structure de guidage 10.

En particulier, les deux séries de poutres 11A, 11B forment ensemble, dans la région d'imbrication 12, une structure périodique sub-longueur d'onde.

Elles forment en particulier, dans ladite région d'imbrication 12, une structure périodique avec un motif élémentaire de dimension A selon l'axe d'allongement de la structure de guidage (voir figure 2A). A définit la période de ladite structure périodique.

Ici, chaque motif élémentaire comporte une seule portion de poutre, appartenant alternativement à la première série de poutres 11A et à la deuxième série de poutres 11B.

La période A est très inférieure à la longueur d'onde guidée $\lambda$. On a par exemple $\Lambda < \dfrac{\lambda}{10}$.

De façon plus précise, la période A est une distance selon (Oz), vérifiant :

$$2\pi\Lambda < \frac{\lambda}{n_{eff}} \qquad\qquad (1)$$

où $n_{eff}$ est l'indice effectif du mode guidé dans la structure de guidage 10.

On a représenté en figure 1B, selon une vue en perspective, un guide d'onde 10' équivalent à la structure de guidage 10, nommé guide d'onde équivalent.

Le guide d'onde équivalent 10' comporte un 12', et deux gaines latérales 13'.

Le 12' est l'équivalent optique de la région d'imbrication 12. Ses dimensions sont celles de la région d'imbrication 12. Il s'agit donc ici d'un parallélépipède rectangle présentant, selon (Ox), la même largeur que la région d'imbrication 12. Son indice optique $n_{eq,c}$ est fonction de l'indice optique des poutres, $n_2$, et de l'indice optique du milieu entourant les poutres, $n_1$. On a en particulier :

$$n_{eq,c}^2 = n_1^2 + DC_c(n_2^2 - n_1^2) \qquad (2)$$

avec $DC_c$ le rapport de forme dans la région d'imbrication 12, défini par $DC_c = a/\Lambda$, où $a$ est la dimension de chaque poutre selon l'axe (Oz) (voir figure 2A).

Chaque gaine latérale 13' est l'équivalent optique de la première série de poutres, respectivement de la deuxième série de poutres, diminuée des portions de poutre situées dans la région d'imbrication 12. Son indice optique $n_{eq,g}$ est fonction des indices optiques $n_2$ et $n_1$ définis ci-dessus. On a en particulier :

$$n_{eq,g}^2 = n_1^2 + DC_g(n_2^2 - n_1^2) \qquad (3)$$

avec $DC_g$ le rapport de forme dans chaque série de poutre, en dehors de la région d'imbrication 12, défini par $DC_g = a/2\Lambda$.

Les gaines supérieure et inférieure ne sont pas considérées dans la suite car elles sont constituées simplement du milieu entourant les poutres, d'indice $n_1$.

Selon l'invention, au moins une poutre est mobile en translation, relativement aux autres poutres, selon un axe orthogonal à l'axe d'allongement (Oz) de la structure de guidage.

Ici, au moins une poutre 11 est mobile en translation selon un axe parallèle à son axe longitudinal (parallèle à (Ox)).

En pratique, toutes les poutres de la structure de guidage sont montées suspendues au-dessus d'un substrat. Une poutre mobile peut être une poutre montée solidaire d'un élément mécanique mobile relativement au substrat. Les autres poutres, fixes, sont montées solidaires d'un élément mécanique fixe relativement au substrat. Selon une variante non représentée, une poutre peut être considérée comme mobile parce qu'elle est plus longue que les autres poutres. Dans ce cas, elle dépasse relativement aux autres poutres de la même série uniquement du côté opposé à la région d'imbrication.

Ici, les poutres de la deuxième série 11B sont fixes les unes relativement aux autres, et mobiles relativement aux poutres de la première série de poutres 11A. Les poutres de la première série de poutres 11A sont fixes.

A la figure 2A, on a représenté de façon schématique, selon une vue de dessus, la structure de guidage 10 dans une première position des poutres mobiles, nommée par exemple position de repos. La région d'imbrication 12 présente alors une première largeur, $W_1$ (ladite largeur étant définie selon l'axe (Ox)).

La position de repos correspond à une position des poutres de la structure de guidage, en l'absence de toute sollicitation mécaniques sur l'au moins une poutre mobile.

La figure 2B montre le guide d'onde équivalent 10', avec un 12' de largeur $W_1$.

A la figure 3A, on a représenté de façon schématique, selon une vue de dessus, la structure de guidage 10 dans une deuxième position des poutres mobiles. La région d'imbrication présente alors une deuxième largeur, $W_2$.

La figure 3B montre le guide d'onde équivalent 10', avec un 12' de largeur $W_2$.

La variation de largeur $\Delta W = |W_1 - W_2|$ se traduit par une variation de l'indice effectif de la structure de guidage et du guide d'onde équivalent.

Ladite variation d'indice effectif se traduit par une variation d'un déphasage optique apporté par la structure de guidage.

Sur une longueur $\mathcal{L}$ de propagation dans la structure de guidage (longueur définie selon l'axe (Oz)), et pour une longueur d'onde $\lambda$ (longueur d'onde dans le vide), la phase acquise par l'onde guidée dans la structure de guidage 10 vaut :

$$\varphi = \frac{2\pi n_{eff}\mathcal{L}}{\lambda} \qquad (4)$$

Ainsi, si l'indice effectif varie de $\Delta n_{eff}$, la phase acquise par l'onde guidée dans la structure de guidage 10 varie de :

$$\Delta\varphi = \frac{2\pi \Delta n_{eff}\mathcal{L}}{\lambda} \qquad (5)$$

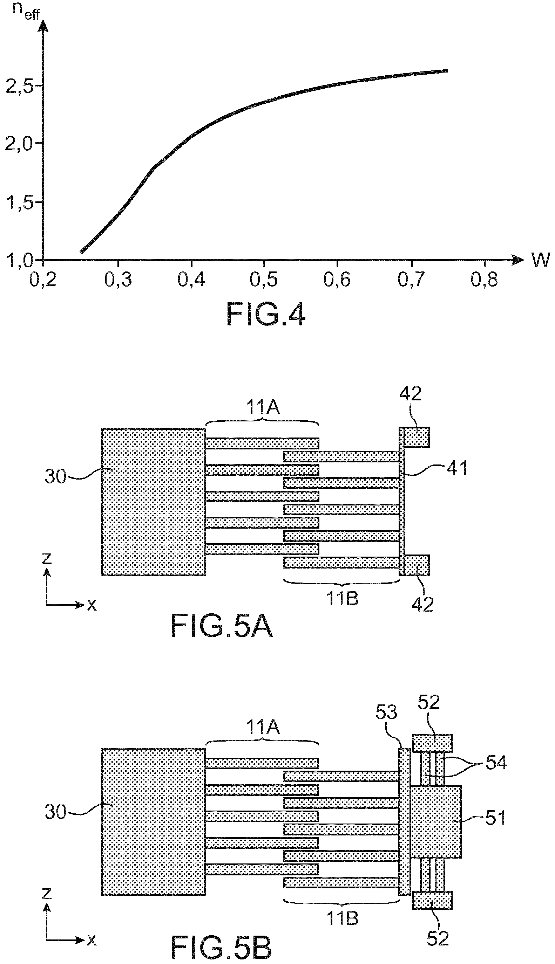

La figure 4 représente l'évolution de l'indice effectif de la structure de guidage, en fonction de la largeur W (en $\mu$m) de la région d'imbrication. Dans cet exemple, les poutres sont en silicium, suspendu dans de l'air.

L'indice effectif varie relativement lentement avec W. Ainsi, dans la limite des petits déplacements (moins de 50 nm par exemple), on relie linéairement la variation $\Delta n_{eff}$ d'indice effectif et le déplacement $\Delta x$ de l'au moins une poutre mobile (correspondant à la variation de largeur $\Delta W$ de la région d'imbrication 12). On a alors :

$$\Delta n_{eff} = \alpha \Delta x \qquad (6)$$

où $\alpha$ est un coefficient, calculé numériquement ou à l'aide d'un modèle analytique approché, par exemple la méthode de l'indice effectif.

On obtient donc finalement :

$$\Delta \varphi = \frac{2\pi \mathcal{L}}{\lambda} \alpha \Delta x \qquad (7)$$

On peut ainsi relier très simplement un déplacement $\Delta x$ de l'au moins une poutre mobile, et un déphasage $\Delta \varphi$ de l'onde guidée dans la structure de guidage 10.

Si les déplacements excèdent la limite des petits déplacements, il reste possible de relier $\Delta x$ et $\Delta \varphi$. On perd simplement la relation linéaire entre $\Delta n_{eff}$ et $\Delta x$.

On remarque que schématiquement, la structure de guidage selon l'invention ressemble à une structure connue dans le domaine de l'électronique, constituée de deux électrodes imbriquées formant ensemble deux peignes interdigités.

De telles électrodes ne sont pas adaptées à guider un faisceau lumineux.

En tout état de cause, selon l'invention, le système opto-mécanique comporte en outre deux tronçons de guide d'onde 21, l'un pour amener le faisceau lumineux F jusqu'en entrée de la structure de guidage 10, l'autre pour éloigner le faisceau lumineux F émergeant de la structure de guidage 10.

L'axe de propagation associé à chacun des tronçons 21 est aligné avec l'axe d'allongement de la structure de guidage.

De préférence, les tronçons 21 sont constitués chacun d'un simple parallélépipède rectangle, de même composition que les poutres de la structure de guidage. Les tronçons 21 ne sont pas forcément agencés suspendus.

L'invention n'est pas limitée à un choix particulier de matériau pour les poutres formant la structure de guidage, ni à une valeur de la longueur d'onde guidée $\lambda$.

De préférence, on privilégie des matériaux couramment utilisés en optique guidée, aux longueurs d'onde non absorbées par ces derniers. Par exemple, les poutres formant la structure de guidage sont en silicium, en silice, en nitrure de silicium, en matériau dit III-V (alliage d'un élément de la colonne III et un élément de la colonne V du tableau périodique des éléments chimiques), etc.

On définit ci-après un intervalle préféré de valeurs de la largeur W de la région d'imbrication.

De préférence, une limite basse, $W_{min}$, est fixée pour que l'étendue spatiale du champ optique évanescent ne s'étende pas au-delà des poutres, selon l'axe (Ox).

Pour une dimension des poutres $l$ selon l'axe (Ox), $W_{min}$ est donc adapté pour que l'extension spatiale du mode guidé dans la structure de guidage soit inférieure à $l$.

On réalise une approximation en deux dimensions du champ en dehors de la région d'imbrication, à l'aide de la méthode d'indice effectif :

$$E(x) = \frac{\exp(-k \frac{W}{2} \sqrt{n_{eff,y}^2 - n_{eq,g}^2} x)}{\exp(-k \frac{W}{2} \sqrt{n_{eff,y}^2 - n_{eq,g}^2})} \qquad (8)$$

où $k$ est le vecteur d'onde,

$n_{eff,y}$ est un indice effectif en deux dimensions de la structure de guidage, prenant en compte le confinement de l'onde selon l'axe (Oy), et

$n_{eq,g}$ est l'indice effectif des gaines latérales de la structure de guidage, définie par l'équation (3).

$W_{min}$ est la largeur telle que 99% du champ soit contenu dans 90% de la structure de guidage. $W_{min}$ est donc définie par :

$$\frac{\exp(-k\frac{W_{min}}{2}\sqrt{n_{eff,y}^2 - n_{eq,g}^2}\,0{,}9l)}{\exp(-k\frac{W_{min}}{2}\sqrt{n_{eff,y}^2 - n_{eq,g}^2})} = 0.01 \qquad (9)$$

Soit :

$$W_{min}(1 - 0.9l)k\sqrt{n_{eff,y}^2 - n_{eq,g}^2} = \ln(0.01) \qquad (10)$$

De préférence, la structure de guidage est dimensionnée pour que la largeur W de la région d'imbrication reste supérieure à $W_{min}$.

De préférence, une limite haute pour $W$, notée $W_{max}$, est fixée pour que le guide optique équivalent soit monomode.

$W_{max}$ est alors défini par :

$$W_{max} = \frac{\lambda}{4\sqrt{n_{eff,y}^2 - n_{eq,g}^2}} \qquad (11)$$

De préférence, la structure de guidage est dimensionnée pour que la largeur W de la région d'imbrication reste inférieure à $W_{max}$.

Les figures 5A et 5B illustrent deux variantes de suspension des poutres mobiles, dans un système opto-mécanique selon l'invention.

Comme précédemment, on considère que les poutres de la première série de poutres 11A sont fixes et que les poutres de la deuxième série de poutres 11B sont mobiles.

Dans les deux variantes, les poutres de la première série 11A sont montées solidaires d'un support fixe 30, à leurs extrémités situées du côté opposé aux poutres de la deuxième série 11B. Le support fixe 30 est fixe relativement au substrat, non représenté, au-dessus duquel les poutres sont suspendues.

A la figure 5A, les poutres de la deuxième série 11B sont montées solidaires d'un support 41, à leurs extrémités situées du côté opposé aux poutres de la première série 11A. Le support 41 s'étend selon l'axe (Oz). Il est monté suspendu au-dessus du substrat, grâce à deux piliers 42 situés à l'une et l'autre de ses deux extrémités, selon l'axe (Oz). Il présente des modes de vibration selon l'axe (Ox). Lorsque le support 41 entre en vibration, les poutres de la deuxième série 11B se déplacent en translation selon l'axe (Ox). Chaque poutre de la deuxième série 11B se déplace alors selon l'axe (Ox), d'une distance qui dépend de sa position relativement aux ventres et aux nœuds de vibration du support 41. Le support suspendu 41 se présente par exemple sous la forme d'une poutre de support, orientée transversalement aux poutres de la structure de guidage.

A la figure 5B, les poutres de la deuxième série 11B sont montées solidaires d'une plaque rigide 51, ici par l'intermédiaire d'une poutre de raccord 53 transverse. La plaque rigide 51 est reliée à deux piliers 52, pour la suspension au-dessus du substrat. Elle est reliée à ces deux piliers 52 par l'intermédiaire de bras de support 54. Les piliers 52 s'étendent chacun selon l'axe (Oy). Les bras de support 54 s'étendent chacun selon l'axe (Oz). Ils présentent chacun une dimension réduite selon l'axe (Ox), autorisant un mouvement de la plaque rigide 51 selon l'axe (Ox). La plaque rigide peut être pleine ou percée.

De nombreuses autres solutions de suspension mécaniques, permettant d'autoriser le mouvement de l'au moins une poutre mobile, peuvent être mises en œuvre sans sortir du cadre de l'invention.

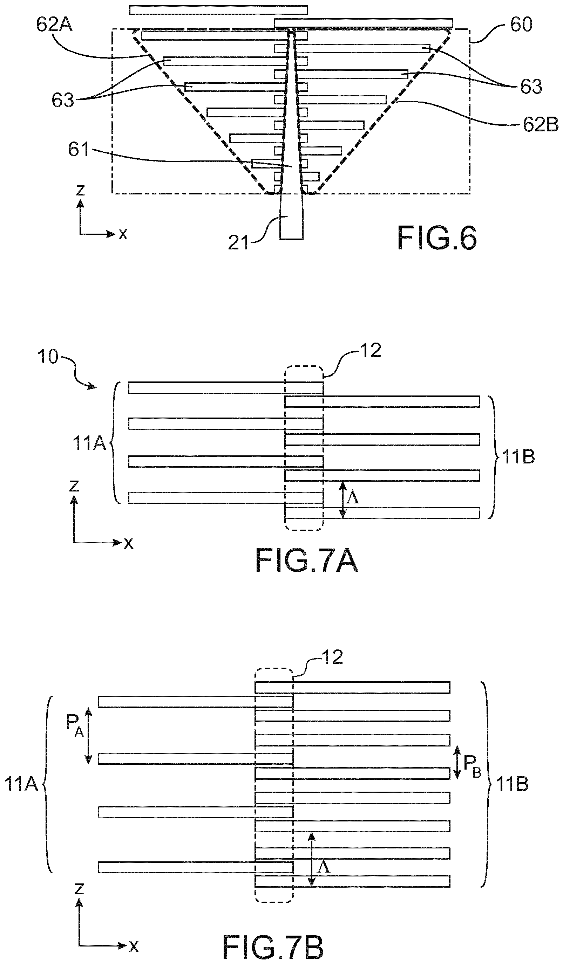

La figure 6 illustre un adaptateur de mode 60, pour réaliser une adaptation entre un mode guidé dans un tronçon de guide d'onde 21, et un mode guidé dans une structure de guidage selon l'invention.

Un tel adaptateur de mode 60 est avantageusement situé en entrée ou en sortie de la structure de guidage, à l'une ou l'autre de ses extrémités selon l'axe d'allongement de ladite structure.

L'adaptateur de mode 60 présente :

- une région centrale 61; et
- deux régions latérales 62A, 62B, non symétriques entre elles, constituées chacune de poutres dites d'adaptation 63.

La région centrale 61 présente ici une forme de cylindre droit à base trapézoïdale, de largeur décroissante (dimension selon l'axe (Ox)) au fur et à mesure que l'on se rapproche de la structure de guidage (le long d'un axe confondu avec l'axe d'allongement de la structure de guidage).

La région centrale 61 présente une symétrie planaire, relativement à un plan parallèle au plan (yOz).

Les régions latérales 62A, 62B sont situées de part et d'autre de la région centrale, le long d'un axe parallèle à (Ox).

Elles sont constituées chacune de poutres 63, nommées poutres d'adaptation, orientées comme les poutres de la structure de guidage.

De préférence, les poutres d'adaptation 63 sont formées ensemble d'un seul tenant avec la région centrale 61.

La dimension des poutres d'adaptation selon l'axe (Ox) (axe longitudinal des poutres de la structure de guidage), augmente progressivement au fur et à mesure que l'on se rapproche de la structure de guidage (le long d'un axe confondu avec l'axe d'allongement de la structure de guidage).

Les dimensions des poutres d'adaptation 63 selon les axes (Oy) et (Oz) sont les mêmes que celles des poutres de la structure de guidage.

L'adaptateur de mode 60 présente la même composition (même matériau, ou même structure constituée de plusieurs matériaux) que les poutres de la structure de guidage.

Les poutres d'adaptation peuvent être agencées suspendues, comme les poutres de la structure de guidage. En variante, les poutres d'adaptation peuvent être noyées dans un matériau d'indice proche de celui du milieu entourant les poutres de la structure de guidage.

L'adaptateur de mode 60 permet d'obtenir moins de 0,1% de perte de signal lors de l'injection d'un faisceau lumineux dans la structure de guidage, respectivement l'extraction hors de la structure de guidage (contre 20% sans l'adaptateur de mode 60).

Les figures 7A et 7B illustrent deux variantes d'une structure de guidage 10 selon l'invention.

A la figure 7A, les poutres de la première série 11A et les poutres de la deuxième série 11B sont réparties selon un même pas régulier.

En revanche, dans la région d'imbrication 12, les poutres des deux séries ne sont pas réparties ensemble selon un pas régulier. Chaque poutre de l'une série est décalée, selon l'axe (Oz), relativement au milieu de l'interstice entre deux poutres de l'autre série.

Les poutres de la structure de guidage forment, dans la région d'imbrication 12, une structure périodique avec un motif élémentaire de dimension A selon l'axe d'allongement de la structure de guidage. Ce motif élémentaire comporte ici une poutre de la première série 11A et une poutre de la deuxième série 11B.

A la figure 7B, les poutres de la première série 11A sont réparties selon un premier pas régulier $P_A$, et les poutres de la deuxième série 11B sont réparties selon un deuxième pas régulier $P_B$ différent de $P_A$. On a par exemple $P_A = 2P_B$.

Les poutres de la structure de guidage forment, dans la région d'imbrication 12, une structure périodique avec un motif élémentaire comportant une poutre de la première série 11A et deux poutres de la deuxième série 11B.

De nombreuses autres répartitions des poutres de la structure de guidage peuvent être mises en œuvre, sans sortir du cadre de l'invention.

Par exemple, les poutres de chaque série de poutres ne sont pas forcément réparties selon un pas régulier, tant que leur agencement présente une périodicité selon l'axe (Oz).

On illustre ensuite des résultats de simulation, validant les explications théoriques développées ci-avant.

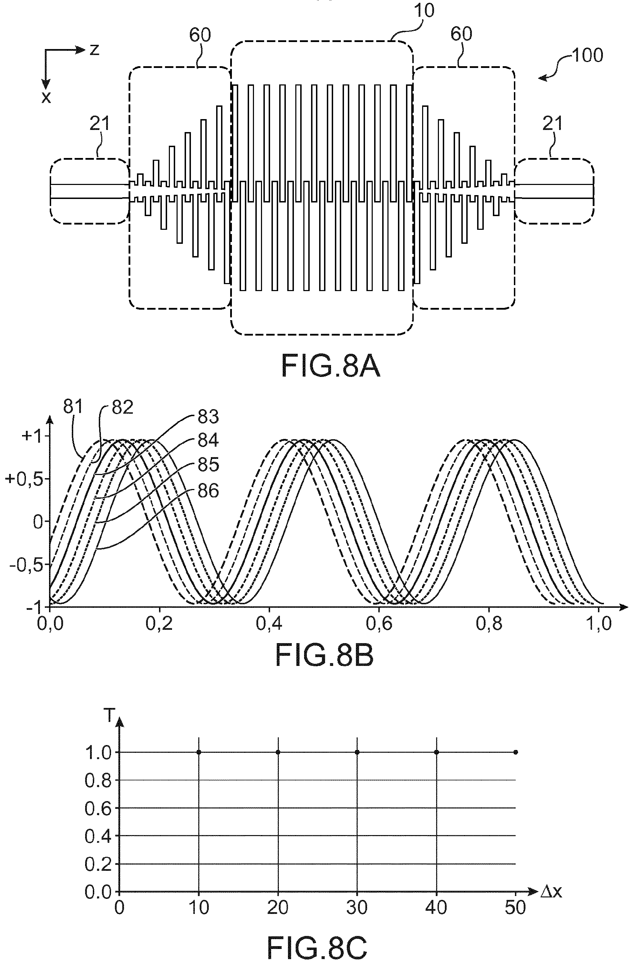

La figure 8A illustre un système opto-mécanique 100 utilisé pour la simulation.

Le système opto-mécanique 100 comporte une structure de guidage 10 telle que décrite en référence à la figure 1A, située entre deux adaptateurs de mode 60 tels que celui de la figure 6, l'ensemble étant lui-même situé entre deux tronçons de guide d'onde 21.

L'une des séries de poutres est mobile en translation selon l'axe (Ox), relativement à l'autre série de poutres. Les déplacements respectifs de chacune des poutres mobiles sont identiques.

Le système 100 présente les caractéristiques suivantes :

- longueur d'onde guidée : $\lambda$ = 1550 *nm* ;
- période de la structure périodique dans la région d'imbrication : A = 100 nm ;
- rapport de forme dans la région d'imbrication : $DC_c$ = 1/2 ;
- dimension des poutres selon (Ox) : 5 $\mu$m ;
- dimension de chaque adaptateur de mode selon (Oz) : 20 $\mu$m ;
- dimension de la structure de guidage selon (Oz) : 30 $\mu$m ;
- largeur de la région d'imbrication, dans une position de repos des poutres: W = 600 *nm ;*
- matériau de la structure de guidage, des adaptateurs de mode et des tronçons de guide d'onde : silicium.

La figure 8B illustre la composante réelle du champ électrique en sortie du système opto-mécanique 100 en fonction d'une distance de propagation selon (Oz), pour différentes valeurs de déplacement Δ*x* des poutres mobiles.

Chacune des courbes 81, 82, 83, 84, 85 et 86 correspond respectivement à Δ*x*=0 nm ; Δ*x*=10 nm ; Δ*x*=20 nm ; Δ*x*=30 nm ; Δ*x*=40 nm ; Δ*x*=50 nm.

On observe bien l'apparition d'un déphasage, proportionnel au déplacement Δ*x* des poutres mobiles.

En outre, ce déphasage n'est pas accompagné d'une perte d'intensité du signal. Ce deuxième point est illustré également par la figure 8C, représentant une transmission T en fonction du déplacement Δ*x* des poutres mobiles. Les pertes relatives sont inférieures à 0,1%.

D'après l'équation (7), lorsque l'au moins une poutre mobile se déplace d'une distance Δ*x*, la phase acquise par l'onde guidée dans la structure de guidage varie d'une valeur Δ*φ*, fonction de la longueur $\mathcal{L}$ de propagation de l'onde guidée dans la structure de guidage.

Ainsi, en augmentant la valeur de la longueur de propagation $\mathcal{L}$, on peut augmenter la plus petite valeur de déplacement Δ*x* détectable.

Pour cela, on peut augmenter l'étendue de la structure de guidage, selon son axe d'allongement.

Une autre solution, plus astucieuse, consiste à augmenter la valeur de la longueur de propagation $\mathcal{L}$, en multipliant les passages de l'onde guidée dans la structure de guidage.

Pour cela, le système opto-mécanique selon l'invention comporte un résonateur optique, résonant à la longueur d'onde guidée λ, et au sein duquel est placée la structure de guidage. La structure de guidage se trouve alors sur le trajet optique d'un faisceau lumineux circulant dans ledit résonateur.

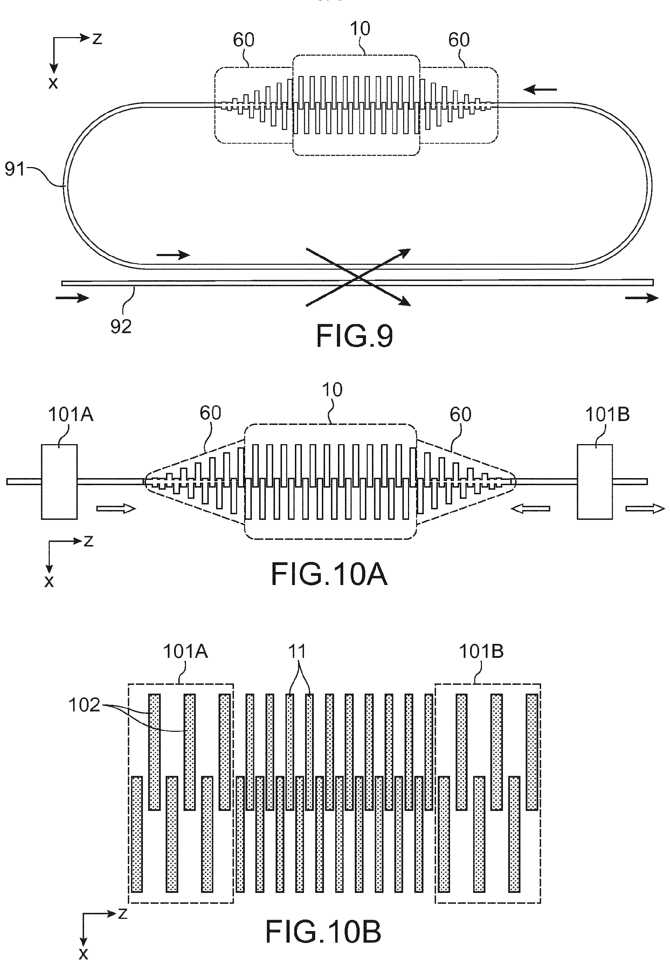

La figure 9 illustre un exemple dans lequel le résonateur optique est de type anneau résonant.

L'anneau résonant est constitué d'un guide d'onde 91 et d'une structure de guidage 10 selon l'invention, située ici entre deux adaptateurs de mode 60. L'ensemble est adapté à réaliser un guidage optique selon un chemin optique en boucle fermée. Ici, ce chemin optique présente deux portions rectilignes, parallèles à (Oz), et deux portions en forme de demi-cercle. La structure de guidage 10 est située sur l'une des deux portions rectilignes.

A la figure 9, on a représenté également un guide d'onde d'injection et extraction 92, pour l'injection et l'extraction d'un faisceau lumineux dans et hors du résonateur optique, par couplage évanescent.

Les flèches indiquent de manière schématique les directions de circulation de la lumière.

Un tel système opto-mécanique permet d'obtenir un taux de couplage $g_{om}$, représentant la sensibilité du système à un déplacement Δ*x*, de l'ordre de 12 GHz/nm (unité utilisée par convention, la fréquence et la longueur d'onde étant liée par λ=c/f, avec c la célérité de la lumière dans le vide). Ce taux est environ 10 fois supérieur à celui pouvant être obtenu dans un système selon l'art antérieur tel que décrit en introduction.

La figure 10A illustre un exemple dans lequel le résonateur optique est une cavité linéaire, ou cavité Fabry-Pérot.

La cavité est constituée de deux miroirs 101A, 101B, réfléchissants à la longueur d'onde guidée λ. Une structure de guidage 10 selon l'invention, située ici entre deux adaptateurs de mode 60, est située entre les deux miroirs 101A, 101B.

Les flèches indiquent de manière schématique les directions de circulation de la lumière, effectuant ici plusieurs allers et retours selon l'axe (Oz), entre les deux miroirs.

La figure 10B illustre une variante avantageuse, dans laquelle les miroirs 101A, 101B sont constitués chacun d'un réseau de Bragg.

Chaque réseau de Bragg est formé par deux jeux de poutres secondaires 102, réparties en deux peignes d'extrémité, partiellement imbriqués l'un dans l'autre. Chaque réseau de Bragg est situé dans une région d'imbrication entre ces deux jeux de poutres secondaires.

Les poutres secondaires 102 ne sont pas réparties selon le même pas que les poutres 11 de la structure de guidage (la différence de pas est volontairement exagérée en figure 10B). Le pas de répartition des poutres secondaires 102 dans la région d'imbrication entre celles-ci est de préférence égal à λ/4, avec λ la longueur d'onde guidée par la structure de guidage 10. Ce pas est donc bien supérieur à la période du motif périodique formé par les poutres de la structure de guidage 10, dans la région d'imbrication associée.

Les poutres secondaires 102 ne présentent pas forcément la même épaisseur que les poutres 11 de la structure de guidage (dimension selon (Oz)).

De préférence, elles présentent la même composition que les poutres 11 de la structure de guidage.

De la même façon, elles présentent de préférence la même dimension selon (Ox) que les poutres 11 de la structure de guidage.

D'autres variantes peuvent être mises en œuvre sans sortir du cadre de l'invention, par exemple avec cavité linéaire fermée par deux boucles de Sagnac. Une boucle de Sagnac est un miroir utilisé dans le domaine de l'optique intégrée sur substrat, utilisant le couplage évanescent entre deux guides d'ondes reliés par une boucle.

La lecture du déphasage Δ*φ* peut se faire par le placement de la structure de guidage au sein d'un résonateur optique, en lisant la position des pics de résonance.

En variante, la lecture du déphasage $\Delta\varphi$ peut se faire par le placement de la structure de guidage dans un interféromètre, en lisant la position de pics de transmission.

La structure de guidage peut être placée en particulier dans l'un des bras d'un interféromètre de Mach-Zehnder. Un tel interféromètre comporte un séparateur (par exemple une jonction Y ou coupleur à interférences multimodes), pour répartir un faisceau lumineux incident sur deux trajets optiques différents, nommés « bras ». En sortie de ces deux bras, un élément de recombinaison (par exemple une jonction Y ou coupleur à interférences multimodes) permet de recombiner ensemble les faisceaux ayant circulé dans chacun des deux bras. La recombinaison produit des interférences, liées à la différence de phase entre les faisceaux ayant circulé dans chacun des deux bras.

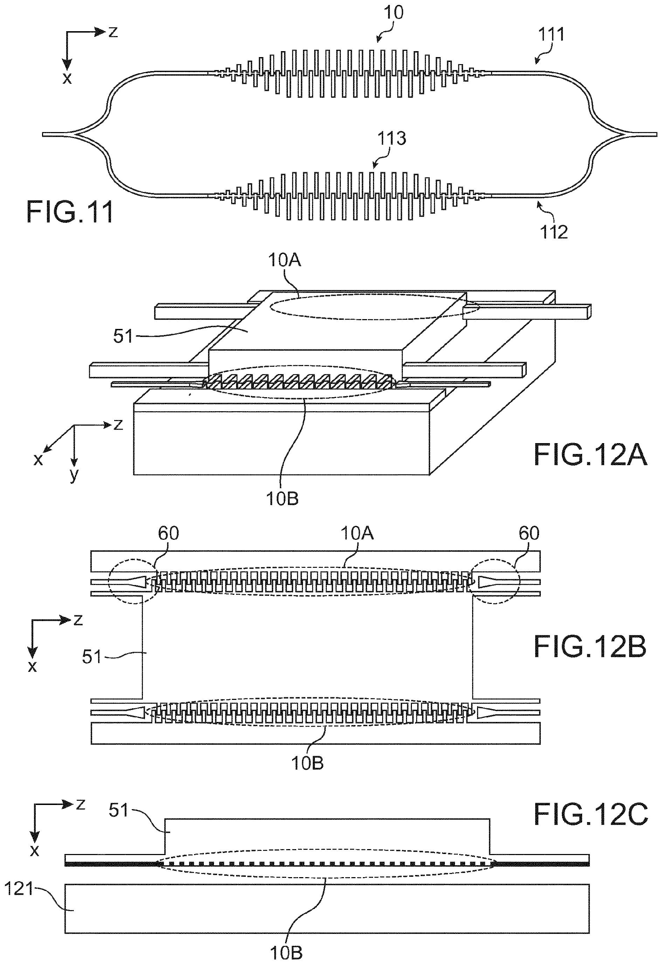

A la figure 11, on a représenté de manière schématique un exemple de système opto-mécanique selon l'invention, comprenant un interféromètre de Mach-Zehnder.

La structure de guidage 10 est située dans un premier bras 111 de l'interféromètre.

Le second bras 112 de l'interféromètre comporte une structure dite de référence 113, suspendue au-dessus d'un substrat.

La structure de référence 113 est identique à la structure de guidage 10, excepté que toutes ses poutres sont fixes relativement au substrat.

Ici, la structure de guidage 10 et la structure de référence 113 sont situées chacune entre deux adaptateurs de mode tels que celui décrit en référence à la figure 6.

Les tronçons de guide d'onde en amont et en aval de chaque structure de guidage sont en silicium, et présentent une section de 500 $\mu$m x 200 $\mu$m.

La différence de phase entre les faisceaux ayant circulé dans chacun des deux bras 111, 112 est donc fonction du déplacement $\Delta x$ des poutres mobiles de la structure de guidage 10.

Les figures 12A à 12C illustrent, respectivement selon une vue en perspective, une vue de dessus, et une vue de côté, un autre exemple de système opto-mécanique selon l'invention, utilisant un interféromètre de Mach-Zehnder. Pour simplifier les figures, on a représenté uniquement les bras de l'interféromètre, et pas les éléments de séparation et de recombinaison. Un tel système est adapté à former un accéléromètre.

Ici, le système opto-mécanique comporte deux structures de guidage 10A, 10B, parallèles entre elles. Des adaptateurs de mode respectifs 60 sont placés en entrée et en sortie de chacune des deux structures de guidage 10A, 10B (représentés de façon schématique seulement).

Les poutres mobiles de chacune des deux structures de guidage 10A, 10B sont montées solidaires d'une même plaque rigide 51, suspendue au-dessus du substrat 121.

La plaque rigide 51 est mobile en translation selon l'axe (Ox).

Le mouvement de la plaque rigide 51 se traduit par une translation simultanée des poutres mobiles de la structure de guidage 10A et des poutres mobiles de la structure de guidage 10B.

En particulier, un déplacement $\Delta x$ de la plaque rigide se traduit par une augmentation de $\Delta x$ de la largeur $W$ de la région d'imbrication de la première structure de guidage 10A, et par une diminution de $\Delta x$ de la largeur $W$ de la région d'imbrication de la deuxième structure de guidage 10B. En d'autres termes, la largeur $W$ de la région d'imbrication varie de manière opposée dans la première structure de guidage 10A et dans la deuxième structure de guidage 10B. On peut ainsi réaliser une mesure différentielle du déphasage, permettant de s'affranchir d'éventuels déphasages non directement liés à $\Delta x$.

Par exemple, la plaque rigide 51 est en silicium, avec une hauteur de 50 $\mu$m (dimension selon (Oy)), une longueur de 300 $\mu$m (dimension selon (Oz)), et une largeur de 300 $\mu$m (dimension selon (Ox)). Les dimensions de chaque structure de guidage sont identiques à celles de l'exemple de la figure 8A. Les tronçons de guide d'onde en amont et en aval de chaque structure de guidage sont en silicium, et présentent une section de 500 $\mu$m x 200 $\mu$m.

On obtient une limite de détection d'accélérations de l'ordre de la dizaine de $\mu$g, voire du $\mu$g, si on place l'interféromètre sous vide. On peut obtenir des performances encore bien meilleures en optimisant notamment le dimensionnement de la plaque rigide 51 et de ses bras de support.

Le système opto-mécanique selon l'invention s'inscrit dans le domaine technique des capteurs de mouvement opto-mécanique intégrés au sein d'un circuit photonique sur puce. Il peut être intégré au sein d'une puce photonique, et bénéficie de tous les avantages liés à cette technologie (faible coût, compacité, efficacité, etc.).

Il permet notamment des mesures de déplacements dépassant 50 nm, là où des effets non-linéaires venaient bouleverser la mesure dès 20 nm, dans l'art antérieur.

Il n'a pas de limite théorique en résolution des plus petits déplacements mesurables, puisque les effets observés peuvent être amplifiés en augmentant une longueur de propagation dans la structure de guidage, le cas échéant par un placement en cavité résonante.

Il peut être couplé à un grand nombre d'oscillateurs mécaniques, ce qui permet une application à de nombreux domaines. Il trouve des applications en particulier dans les domaines suivants :

- mesure inertielle (le système peut former un accéléromètre, un gyromètre, etc.) ;

- mesure fluidique (mesure du mouvement d'un fluide, mesure d'une viscosité, etc.) ;
- biocapteurs (par exemple en fixant des anticorps sur les poutres mobiles, sur lesquelles des molécules cibles peuvent venir se greffer) ;
- photo-acoustique (l'onde de pression acoustique étant apte à déplacer un élément solidaire des poutres mobiles) ;
  etc.

Le système opto-mécanique selon l'invention peut être réalisé à partir d'un empilement SOI (pour silicium sur isolant), comportant superposées une fine couche de silicium et une couche épaisse de dioxyde de silicium.

La fine couche de silicium est gravée sur toute son épaisseur, pour former la structure de guidage, les éventuels adaptateurs de mode, les tronçons de guide d'onde, et le cas échéant des éléments dédiés à la suspension et la mise en mouvement des poutres mobiles. La gravure peut être réalisée par lithographie, à l'aide d'un masque dur.

La couche épaisse de dioxyde de silicium est gravée localement, pour réaliser la suspension des poutres suspendues, et le cas échéant celle d'autres éléments tels que les adaptateurs de mode, des éléments solidaires des poutres mobiles, etc. La gravure peut être réalisée par gravure à l'acide fluorhydrique.

L'invention n'est pas limitée aux exemples détaillés ci-dessus, et de nombreux autres exemples peuvent être mis en œuvre sans sortir du cadre de l'invention.

Par exemple, l'au moins une poutre mobile peut être mobile selon un axe (Oy) (dimension de la hauteur des poutres), orthogonal à la fois à son axe longitudinal et à l'axe d'allongement de la structure de guidage. Le déplacement de l'au moins une poutre mobile modifie alors la hauteur du du guide d'onde équivalent, ce qui permet également de traduire un déplacement de poutre en un déphasage optique.

L'au moins une poutre mobile peut également être mobile selon un axe orthogonal à l'axe d'allongement de la structure de guidage, présentant à la fois une composante selon l'axe (Ox) (axe longitudinal des poutres) et une composante selon l'axe (Oy) (axe de la hauteur des poutres). Le déplacement de l'au moins une poutre mobile modifie alors la hauteur et la largeur du du guide d'onde équivalent.

Toutes les poutres ne présentent pas forcément les mêmes dimensions.

En particulier, au moins une poutre peut être plus longue que les autres (dimension selon l'axe (Ox)), pour favoriser son mouvement. Elle forme alors une poutre mobile au sens de l'invention. De préférence, dans chaque série de poutres, les extrémités de poutre situées du côté de la région d'imbrication sont alignées ensemble selon un axe parallèle à l'axe (Oz) (axe d'allongement de la structure de guidage). Dans ce cas, l'au moins une poutre plus longue dépasse du côté opposé à la région d'imbrication.

Certaines poutres peuvent être plus épaisses que d'autres (dimension selon l'axe (Oz)).

Dans les exemples ci-dessus, toutes les poutres de chaque peigne sont maintenues solidaires ensemble. En variante, dans un même peigne, seules certaines poutres sont solidaires d'un élément mobile. Chaque peigne peut alors comporter à la fois des poutres mobiles, et des poutres fixes. Il comporte par exemple un ensemble de poutres mobiles, situé entre deux ensembles de poutres fixes.

Selon un autre exemple, les deux séries de poutres peuvent être décalées l'une relativement à l'autre à la fois selon l'axe (Ox) et selon l'axe (Oy).

Selon un autre exemple, les poutres peuvent présenter des faces non planes.

Le système opto-mécanique selon l'invention peut comporter plusieurs structures de guidage orientées selon différents axes, pour réaliser des mesures multi-axe.

Les tronçons de guide d'onde peuvent présenter des réseaux surfaciques de couplage, pour réaliser un couplage optique entre un circuit nano-photonique recevant le système opto-mécanique selon l'invention et l'extérieur du circuit (par exemple une fibre optique).

**Revendications**

1.  Système opto-mécanique (100) de transduction d'un déplacement en un déphasage optique, comportant :

    - au moins une structure de guidage (10 ; 10A ; 10B), adaptée à guider un faisceau lumineux (F) centré sur une longueur d'onde prédéterminée, nommée longueur d'onde guidée ; et
    - au moins deux tronçons de guide d'onde (21), agencés chacun pour amener un faisceau lumineux jusqu'à l'au moins une structure de guidage, ou pour éloigner un faisceau lumineux émergeant de l'au moins une structure de guidage ;

    caractérisé en ce que :

    - l'au moins une structure de guidage (10; 10A ; 10B) comprend une pluralité de poutres (11) parallèles entre elles, réparties les unes à la suite des autres selon un axe d'allongement de la structure de guidage, et agencées en deux peignes (11A, 11B) partiellement imbriqués l'un dans l'autre ; et

- dans l'au moins une structure de guidage (10 ; 10A, 10B), au moins une poutre (11) est mobile en translation relativement aux autres poutres de la même structure de guidage, selon un axe orthogonal à l'axe d'allongement de la structure de guidage.

2. Système opto-mécanique (100) selon la revendication 1, **caractérisé en ce que** les poutres (11) de la structure de guidage (10 ; 10A ; 10B) forment ensemble, dans une région d'imbrication (12) entre les poutres, une structure périodique ayant un motif élémentaire de dimension A selon l'axe d'allongement de la structure de guidage, avec :

$$2\pi\Lambda < \frac{\lambda}{n_{eff}}$$

où $\lambda$ est la longueur d'onde guidée, et $n_{eff}$ est l'indice effectif du mode guidé dans la structure de guidage (10 ; 10A ; 10B).

3. Système opto-mécanique (100) selon la revendication 1 ou 2, **caractérisé en ce que** l'au moins une poutre est mobile en translation selon son axe longitudinal.

4. Système opto-mécanique (100) selon l'une quelconque des revendications 1 à 3, **caractérisé en ce que** les poutres des deux peignes (11A, 11B) sont réparties en alternance le long de l'axe d'allongement de la structure de guidage.

5. Système opto-mécanique (100) selon l'une quelconque des revendications 1 à 4, **caractérisé en ce qu'**il comporte un résonateur optique, au sein duquel est située la structure de guidage (10).

6. Système opto-mécanique (100) selon la revendication 5, **caractérisé en ce que** le résonateur optique est une cavité linéaire.

7. Système opto-mécanique (100) selon la revendication 6, **caractérisé en ce que** les miroirs (101A, 101B) de la cavité linéaire sont constitués chacun d'un réseau de Bragg, chaque réseau de Bragg étant formé par deux jeux de poutres secondaires (102), agencés en deux peignes d'extrémité partiellement imbriqués.

8. Système opto-mécanique (100) selon la revendication 5, **caractérisé en ce que** le résonateur optique comporte un guide d'onde recourbé (91), agencé avec la structure de guidage (10) pour guider la lumière selon un chemin optique en boucle fermée.

9. Système opto-mécanique (100) selon l'une quelconque des revendications 1 à 8, **caractérisé en ce qu'**il comporte un interféromètre de Mach-Zehnder, au sein duquel est située la structure de guidage (10 ; 10A ; 10B).

10. Système opto-mécanique (100) selon la revendication 9, **caractérisé en ce que** la structure de guidage (10) est située dans un premier bras (111) de l'interféromètre et **en ce qu'**une structure de référence (113) est située dans un second bras (112) de l'interféromètre, la structure de référence (113) étant identique à la structure de guidage (10), excepté que l'ensemble des poutres qui la composent sont fixes.

11. Système opto-mécanique (100) selon la revendication 9, **caractérisé en ce qu'**il comporte deux structures de guidage (10A, 10B) situées chacune dans l'un des bras de l'interféromètre, et **en ce que** des poutres mobiles de chacune des deux structures de guidage sont solidaires les unes des autres.

12. Système opto-mécanique (100) selon l'une quelconque des revendications 1 à 11, **caractérisé en ce qu'**il comporte en outre au moins un adaptateur de mode (60), chaque adaptateur de mode étant situé à une extrémité de l'une structure de guidage (10 ; 10A ; 10B) et comprenant :

- une région centrale (61), de largeur décroissante en s'approchant de la structure de guidage ; et
- deux régions latérales (62A, 62B), de largeur croissante en s'approchant de la structure de guidage, situées de part et d'autre de la région centrale (61) et comportant chacune une pluralité de poutres d'adaptation (63), parallèles aux poutres de la structure de guidage.

**13.** Système opto-mécanique (100) selon l'une quelconque des revendications 1 à 12, **caractérisé en ce que** l'au moins une poutre mobile de la structure de guidage comprend une poutre qui est solidaire d'un support suspendu (41) s'étendant selon l'axe d'allongement de la structure de guidage.

**14.** Système opto-mécanique (100) selon l'une quelconque des revendications 1 à 13, **caractérisé en ce que** l'au moins une poutre mobile de la structure de guidage comprend une poutre qui est solidaire d'une masse (51) suspendue au-dessus d'un substrat.

**Patentansprüche**

**1.** Opto-mechanisches System (100) zum Umwandeln einer Bewegung in eine optische Phasenverschiebung, enthaltend:

- zumindest eine Führungsstruktur (10; 10A; 10b), die dazu geeignet ist, einen Lichtstrahl (F) zu führen, der auf eine vorbestimmte Wellenlänge zentriert ist, geführte Wellenlänge genannt; und
- zumindest zwei Wellenleiterabschnitte (21), die jeweils dazu angeordnet sind, einen Lichtstrahl zu der zumindest einen Führungsstruktur zu führen oder einen aus der zumindest einen Führungsstruktur austretenden Lichtstrahl wegführen; **dadurch gekennzeichnet, dass**
- die zumindest eine Führungsstruktur (10; 10A; 10B) eine Vielzahl von zueinander parallelen Balken (11) enthält, die nacheinander entlang einer Ausdehnungsachse der Führungsstruktur verteilt und in zwei teilweise ineinandergreifenden (11A, 11B) Kämmen angeordnet sind; und
- in der zumindest einen Führungsstruktur (10; 10A, 10B) zumindest ein Balken (11) relativ zu den anderen Balken derselben Führungsstruktur entlang einer zur Ausdehnungsachse der Führungsstruktur orthogonalen Achse translatorisch beweglich ist.

**2.** Opto-mechanisches System (100) nach Anspruch 1, **dadurch gekennzeichnet, dass** die Balken (11) der Führungsstruktur (10; 10A; 10b) zusammen in einem ineinandergreifenden Bereich (12) zwischen den Balken eine periodische Struktur mit einem elementaren Muster der Abmessung A entlang der Ausdehnungsachse der Führungsstruktur bilden, mit

$$2\pi\Lambda < \frac{\lambda}{n_{eff}}$$

wobei $\lambda$ die geführte Wellenlänge ist und $n_{eff}$ der effektive Index der geführten Mode in der Führungsstruktur (10; 10A; 10B) ist.

**3.** Opto-mechanisches System (100) nach Anspruch 1 oder 2, **dadurch gekennzeichnet, dass** der zumindest eine Balken entlang seiner Längsachse translatorisch verschiebbar ist.

**4.** Opto-mechanisches System (100) nach einem der Ansprüche 1 bis 3, **dadurch gekennzeichnet, dass** die Balken der beiden Kämme (11A, 11B) wechselweise entlang der Ausdehnungsachse der Führungsstruktur verteilt sind.

**5.** Opto-mechanisches System (100) nach einem der Ansprüche 1 bis 4, **dadurch gekennzeichnet, dass** es einen optischen Resonator enthält, innerhalb welchem die Führungsstruktur (10) liegt.

**6.** Opto-mechanisches System (100) nach Anspruch 5, **dadurch gekennzeichnet, dass** der optische Resonator ein linearer Hohlraum ist.

**7.** Opto-mechanisches System (100) nach Anspruch 6, **dadurch gekennzeichnet, dass** die Spiegel (101A, 101B) des linearen Hohlraums jeweils aus einem Bragg-Gitter bestehen, wobei jedes Bragg-Gitter aus zwei Sätzen von Nebenbalken (102) besteht, die in zwei teilweise ineinandergreifenden Endkämmen angeordnet sind.

**8.** Opto-mechanisches System (100) nach Anspruch 5, **dadurch gekennzeichnet, dass** der optische Resonator einen gekrümmten Wellenleiter (91) enthält, der mit der Führungsstruktur (10) dazu angeordnet ist, um das Licht entlang eines geschlossenen Lichtwegs zu leiten.

9. Opto-mechanisches System (100) nach einem der Ansprüche 1 bis 8, **dadurch gekennzeichnet, dass** es ein Mach-Zehnder-Interferometer enthält, innerhalb dessen sich die Führungsstruktur (10; 10A; 10B) befindet.

10. Opto-mechanisches System (100) nach Anspruch 9, **dadurch gekennzeichnet, dass** die Führungsstruktur (10) sich in einem ersten Arm (111) des Interferometers befindet und dass eine Referenzstruktur (113) sich in einem zweiten Arm (112) des Interferometers befindet, wobei die Referenzstruktur (113) mit der Führungsstruktur (10) identisch ist, abgesehen davon, dass alle Balken, aus denen sie sich zusammensetzt, fest sind.

11. Opto-mechanisches System (100) nach Anspruch 9, **dadurch gekennzeichnet, dass** es zwei Führungsstrukturen (10A, 10B) enthält, die sich jeweils in einem der Arme des Interferometers befinden, und dass die beweglichen Balken jeder der beiden Führungsstrukturen fest miteinander verbunden sind.

12. Opto-mechanisches System (100) nach einem der Ansprüche 1 bis 11, **dadurch gekennzeichnet, dass** es ferner zumindest einen Modeadapter (60) enthält, wobei sich jeder Modeadapter an einem Ende der einen Führungsstruktur (10; 10A; 10B) befindet und enthält:

- einen zentralen Bereich (61), dessen Breite mit zunehmender Annäherung an die Führungsstruktur abnimmt; und
- zwei seitliche Bereiche (62A, 62B), deren Breite mit zunehmender Annäherung an die Führungsstruktur zunimmt, die sich auf beiden Seiten des zentralen Bereichs (61) befinden und jeweils eine Vielzahl von Anpassungsbalken (63) aufweisen, die parallel zu den Balken der Führungsstruktur verlaufen.

13. Opto-mechanisches System (100) nach einem der Ansprüche 1 bis 12, **dadurch gekennzeichnet, dass** der zumindest eine bewegliche Balken der Führungsstruktur einen Balken enthält, der mit einem aufgehängten Träger (41) fest verbunden ist, der sich entlang der Ausdehnungsachse der Führungsstruktur erstreckt.

14. Opto-mechanisches System (100) nach einem der Ansprüche 1 bis 13, **dadurch gekennzeichnet, dass** der zumindest eine bewegliche Balken der Führungsstruktur einen Balken enthält, der mit einer über einem Substrat aufgehängten Masse (51) fest verbunden ist.

**Claims**

1. An opto-mechanical system (100) for transducing a movement into an optical phase shift, including:

- at least one guide structure (10; 10A; 10B), adapted to guide a light beam (F) centred on a predetermined wavelength, called a guided wavelength; and
- at least two waveguide segments (21), each arranged to bring a light beam up to the at least one guide structure, or to move an emerging light beam away from the at least one guide structure;

**characterised in that**:

- the at least one guide structure (10; 10A; 10B) comprises a plurality of cantilevers (11) parallel to each other, distributed one after the other along an elongation axis of the guide structure, and arranged in two combs (11A, 11B) partially interlocked into each other; and
- in the at least one guide structure (10; 10A; 10B), at least one cantilever (11) is translationally movable relative to the other cantilevers of the same guide structure, along an axis orthogonal to the elongation axis of the guide structure.

2. The opto-mechanical system (100) according to claim 1, **characterised in that** the cantilevers (11) of the guide structure (10; 10A; 10B) form together, in an interlocking region (12) between cantilevers, a periodic structure having a unit cell with a dimension A along the elongation axis of the guide structure, with:

$$2\pi\Lambda < \frac{\lambda}{n_{eff}}$$

where λ is the guided wavelength, and $n_{eff}$ is the effective index of the guided mode in the guide structure (10; 10A; 10B).

3. The opto-mechanical system (100) according to claim 1 or 2, **characterised in that** the at least one cantilever is translationally movable along its longitudinal axis.

4. The opto-mechanical system (100) according to any of claims 1 to 3, **characterised in that** the cantilevers of both combs (11A, 11B) are alternately distributed along the elongation axis of the guide structure.

5. The opto-mechanical system (100) according to any of claims 1 to 4, **characterised in that** it includes an optical resonator, within which the guide structure (10) is located.

6. The opto-mechanical system (100) according to claim 5, **characterised in that** the optical resonator is a linear cavity.

7. The opto-mechanical system (100) according to claim 6, **characterised in that** the mirrors (101A, 101B) of the linear cavity each consist of a Bragg grating, each Bragg grating being formed by two sets of secondary cantilevers (102), arranged in two partially interlocked end combs.

8. The opto-mechanical system (100) according to claim 5, **characterised in that** the optical resonator includes a curved waveguide (91), arranged with the guide structure (10) to guide light along a closed loop optical path.

9. The opto-mechanical system (100) according to any of claims 1 to 8, **characterised in that** it includes a Mach-Zehnder interferometer, within which the guide structure (10; 10A; 10B) is located.

10. The opto-mechanical system (100) according to claim 9, **characterised in that** the guide structure (10) is located in a first arm (111) of the interferometer and **in that** a reference structure (113) is located in a second arm (112) of the interferometer, the reference structure (113) being identical to the guide structure (10), except that all the cantilevers making it up are fixed.

11. The opto-mechanical system (100) according to claim 9, **characterised in that** it includes two guide structures (10A, 10B) each located in one of the arms of the interferometer, and **in that** movable cantilevers of each of both guide structures are integral with each other.

12. The opto-mechanical system (100) according to any of claims 1 to 11, **characterised in that** it further includes at least one mode adaptor (60), each mode adaptor being located at one end of the one guide structure (10; 10A; 10B) and comprising:

   - a central region (61), having a decreasing width as it gets closer to the guide structure; and
   - two side regions (62A, 62B), having an increasing width as they get closer to the guide structure, located on either side of the central region (61) and each including a plurality of adaptation cantilevers (63), parallel to the cantilevers of the guide structure.

13. The opto-mechanical system (100) according to any of claims 1 to 12, **characterised in that** the at least one movable cantilever of the guide structure comprises a cantilever which is integral with a suspended support (41) extending along the elongation axis of the guide structure.

14. The opto-mechanical system (100) according to any of claims 1 to 13, **characterised in that** the at least one movable cantilever of the guide structure comprises a cantilever which is integral with a mass (51) suspended above a substrate.

FIG.1A

FIG.1B

FIG.2A

FIG.2B

FIG.3A

FIG.3B

FIG.4

FIG.5A

FIG.5B

FIG.6

FIG.7A

FIG.7B

19

FIG.8A

FIG.8B

FIG.8C

FIG.9

FIG.10A

FIG.10B

**FIG.11**

**FIG.12A**

**FIG.12B**

**FIG.12C**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015107357 A1
- US 2002021853 A
- WO 2012155284 A

**Littérature non-brevet citée dans la description**

- **V.T.K. SAUER.** Optical racetrack resonator transduction of nanomechanical cantilevers. *Nanotechnology,* 2014, vol. 25
- **TAEJOON KOUH.** Nanomechanical Motion Transducers for Miniaturized Mechanical Systems. *Micromachines,* 2017, vol. 8 (4